# DEMANDE DE BREVET EUROPEEN

(11) **EP 1 029 710 A1**
(43) Date de publication de la demande: **23.08.2000**
(21) Numéro de dépôt: 00400451.1
(22) Date de dépôt: 18.02.2000
(51) Int. Cl.: B60B 33/02

(54) **Chariot comprenant un bâti monté sur dispositifs à roulette pivotante, et dispositif à roulette pivotante en particulier pour un tel chariot**

(30) Priorité: 18.02.1999 FR 9902007
(71) Demandeur: ATELIERS REUNIS CADDIE, 67301 Schiltigheim Cedex (FR)
(72) Inventeur: Joseph, Alice, 67301 Schiltigheim Cedex (FR); Le Marchand, Alain, 67116 Reichstett (FR)
(74) Mandataire: CABINET BONNET-THIRION

(57) **Abrégé**

Le chariot comprend un bâti monté sur dispositifs à roulette pivotante, deux dispositifs (3a) au moins étant prévus à une première extrémité du chariot, ces deux dispositifs à roulette pivotante (3a) étant situés respectivement de part et d'autre de l'axe longitudinal moyen du chariot. Chacun des dispositifs (3a) de la première extrémité comporte un moyen de blocage (16) du pivotement de la roulette à action unilatérale; ce moyen de blocage (16) est propre à laisser la roulette libre de pivoter dans un sens, suivant une amplitude suffisante, et à bloquer le pivotement dans l'autre sens. Les sens de blocage sont opposés pour les deux roulettes de la première extrémité du chariot situées de part et d'autre de l'axe longitudinal moyen du chariot. Un dispositif de blocage (16) comporte un doigt (17) muni d'une rampe (24) et s'étendant dans une échancrure (19) en U d'une coupelle retournée (14).

## Description

L'invention est relative à un chariot du genre de ceux qui comprennent un bâti monté sur dispositifs à roulette pivotante, deux dispositifs au moins étant prévus à une première extrémité du chariot, ces deux dispositifs à roulette pivotante étant situés respectivement de part et d'autre de l'axe longitudinal moyen du chariot.

De tels chariots sont utilisés, notamment, dans les magasins libre-service par les acheteurs pour le transport de leurs emplettes, ou dans les gares et aérogares par les voyageurs pour le transport de leurs bagages.

Lorsque toutes les roulettes du chariot sont pivotantes, on peut facilement faire tourner le chariot sur lui-même, mais il devient plus délicat de le maintenir en ligne droite lorsqu'il est chargé. Lorsque des roulettes prévues à l'une des extrémités du chariot ont une orientation fixe convenable, le chariot garde bien sa trajectoire en ligne droite, mais il est moins facile de le faire tourner dans un espace réduit.

On a déjà proposé dans le document FR-A-2 738 209 un chariot du genre défini précédemment, dans lequel chacun des dispositifs à roulette pivotante de la première extrémité comporte un moyen de blocage du pivotement de la roulette à action unilatérale et propre à laisser la roulette libre de pivoter dans un sens, suivant une amplitude suffisante, et à bloquer le pivotement dans l'autre sens, les sens de blocage étant opposés pour les deux roulettes de la première extrémité du chariot situées de part et d'autre de l'axe longitudinal moyen du chariot ; selon ce document, le moyen de blocage à action unilatérale d'une roulette comprend un doigt lié en pivotement à la roulette et situé au-dessus de celle-ci, ce doigt s'étendant sensiblement orthogonalement à la direction du pivot et pouvant s'engager dans une échancrure ménagée dans un rebord d'une coupelle retournée, fixe par rapport au bâti et située au-dessus de la roulette, l'une des extrémités de l'échancrure formant une butée d'arrêt du doigt, tandis que le fond de l'échancrure comporte une rampe qui, en s'éloignant de la butée d'arrêt, descend progressivement pour rejoindre le contour inférieur du rebord de la coupelle et permettre le passage du doigt.

Un tel dispositif à roulette fonctionne bien mais, la rampe étant portée par la coupelle retournée, il est nécessaire, compte tenu du sens de la rampe, de prévoir deux types de coupelle à sens de la rampe inversés une pour la roulette de droite et une pour la roulette de gauche.

Les coupelles étant des pièces importantes, la présente invention a pour but de proposer un dispositif à roulette muni d'un moyen de blocage dans lequel la coupelle est d'un seul type, à échancrure en U, applicable tant à la roulette de droite qu'à la roulette de gauche.

Ainsi, selon l'invention, un chariot comprenant un bâti monté sur dispositifs à roulette pivotante, deux dispositifs au moins étant prévus à une première extrémité du chariot, ces deux dispositifs à roulette pivotante étant situés respectivement de part et d'autre de l'axe longitudinal moyen du chariot, chacun des dispositifs à roulette de la première extrémité comportant un moyen de blocage du pivotement de la roulette à action unilatérale et propre à laisser la roulette libre de pivoter dans un sens, suivant une amplitude suffisante, et à bloquer le pivotement dans l'autre sens, les sens de blocage étant opposés pour les deux roulettes de la première extrémité du chariot situées de part et d'autre de l'axe longitudinal moyen du chariot, le moyen de blocage à action unilatérale d'une roulette comprenant un doigt lié en pivotement à la roulette et situé au-dessus de celle-ci, ce doigt s'étendant sensiblement orthogonalement à la direction du pivot et pouvant s'engager dans une échancrure ménagée dans un rebord d'une coupelle retournée, fixe par rapport au bâti et située au-dessus de la roulette, l'une des extrémités de l'échancrure formant une butée d'arrêt du doigt, est caractérisé par le fait que l'échancrure est en U et le doigt comporte une rampe de sorte qu'en s'éloignant de la butée d'arrêt il descend progressivement pour rejoindre le contour inférieur du rebord de la coupelle et passe l'échancrure.

Grâce à cette disposition, seul le doigt, qui est une pièce simple, est de deux types.

Avantageusement, la rampe est constituée par la face supérieure d'un bec issu de l'extrémité radiale extérieure du doigt en forme de lamelle, découpée transversalement et relevée vers le haut.

La roulette est montée rotative autour d'un axe porté par une chape et le doigt est avantageusement articulé sur une tige orthogonale à la direction de l'axe de pivotement, située à distance radiale du dit axe de pivotement, entre cet axe de pivotement et le rebord de la coupelle, et un moyen élastique est prévu pour appliquer le doigt contre une jupe que présente la coupelle à sa partie supérieure, le bec s'étendant dans l'échancrure.

Le moyen élastique est avantageusement constitué par un ressort de compression, en particulier placé coaxialement à l'axe de pivotement, prenant appui à une extrémité contre une partie fixée au bâti du chariot et, à son autre extrémité, contre la zone intérieure du doigt.

De préférence, les dispositifs à roulette pivotante munis d'un tel moyen de blocage à action unilatérale sont les dispositifs à roulette arrière, considérés suivant le sens normal de progression du chariot. Les roulettes arrière sont généralement montées pivotantes autour d'un axe vertical décalé longitudinalement vers l'avant par rapport à l'axe de rotation de la roulette ; de préférence pour une telle configuration, le moyen de blocage de chaque roulette arrière est propre à bloquer tout pivotement de la roulette vers l'extérieur, à partir de la position normale des roulettes arrière dans une progression en ligne droite du chariot, et à laisser libre un pivotement vers l'intérieur, au moins sur une plage angulaire suffisante.

Le moyen de blocage à action unilatérale de chaque roulette est avantageusement agencé pour permettre un pivotement complet sur un ou plusieurs tours de la roulette dans le sens autorisé.

Selon une première application de l'invention, la roulette est classique et adaptée à rouler sur une surface lisse.

Selon une autre application, la roulette est adaptée à immobiliser le chariot sur un trottoir roulant garni d'un tapis à surface rainurée et comprend deux flasques montés libres en rotation autour de l'axe et entre lesquels est disposé un organe intermédiaire immobilisé en rotation par rapport au bâti et portant un patin ; l'organe intermédiaire est en forme générale de disque et présente à sa partie supérieure une jambe munie d'un collet destiné à s'engager dans la jupe de la chape ; une découpe affectant tant le collet que la jambe elle-même reçoit en partie le moyen de blocage.

L'invention concerne également un dispositif à roulette pivotante pour chariot, en particulier pour un chariot tel que défini précédemment, comprenant une roulette montée rotative autour d'un axe porté par une chape, un pivot orthogonal à l'axe de la roulette et décalé par rapport à cet axe, la chape et la roulette pouvant s'orienter autour du pivot, et un moyen de blocage du pivotement, qui comprend un doigt lié en pivotement à la roulette et situé au-dessus de celle-ci, ce doigt s'étendant sensiblement orthogonalement à la direction du pivot et pouvant s'engager dans une échancrure ménagée dans le rebord d'une coupelle retournée fixe par rapport au pivot et située au-dessus de la roulette, l'une des extrémités de cette échancrure formant une butée d'arrêt du doigt, caractérisé par le fait que l'échancrure est en U et le doigt comporte une rampe de sorte qu'en s'éloignant de la butée d'arrêt il descend progressivement pour rejoindre le contour inférieur du rebord de la coupelle et passe l'échancrure.

Avantageusement, la rampe est constituée par la face supérieure d'un bec issu de l'extrémité radiale extérieure du doigt en forme de lamelle, découpée transversalement et relevée vers le haut.

De préférence, le doigt est articulé sur une tige orthogonale à la direction de l'axe de pivotement, située à distance radiale du dit axe de pivotement, entre cet axe de pivotement et le rebord de la coupelle, et un moyen élastique est prévu pour appliquer le doigt contre une jupe que présente la chape à sa partie supérieure, le bec s'étendant dans l'échancrure.

Avantageusement, le moyen élastique est constitué par un ressort de compression, en particulier placé coaxialement à l'axe de pivotement, prenant appui à une extrémité contre une partie fixée au bâti du chariot et, à son autre extrémité, contre la zone intérieure du doigt.

Un tel dispositif à roulette selon l'invention est caractérisé par le fait que le moyen de blocage du pivotement est à action unilatérale et est propre à laisser la roulette libre de pivoter dans un sens, sur une amplitude suffisante, et à bloquer le pivotement dans l'autre sens.

De préférence, le moyen de blocage à action unilatérale est agencé pour permettre un pivotement complet sur un ou plusieurs tours de la roulette dans le sens autorisé.

Selon une première application de l'invention, la roulette est classique et adaptée à rouler sur une surface lisse.

Selon une autre application, la roulette est adaptée à immobiliser le chariot sur un trottoir roulant garni d'un tapis à surface rainurée et comprend deux flasques montés libres en rotation autour de l'axe et entre lesquels est disposé un organe intermédiaire immobilisé en rotation par rapport au bâti et portant un patin ; l'organe intermédiaire est en forme générale de disque et présente à sa partie supérieure une jambe munie d'un collet destiné à s'engager dans la jupe de la chape ; une découpe affectant tant le collet que la jambe elle-même reçoit en partie le moyen de blocage.

L'invention consiste mises à part les dispositions exposées ci-dessus, en un certain nombre d'autres dispositions dont il sera plus explicitement question ci-après à propos d'un exemple de réalisation décrit avec références aux dessins annexés nullement limitatifs. Sur ces dessins :
- la figure 1 est une vue en perspective de la partie inférieure d'un chariot conforme à l'invention ;
- la figure 2 est une vue en perspective, à plus grande échelle, avec partie arrachée et partie en coupe, d'un dispositif à roulette selon l'invention, correspondant à une roulette arrière du chariot de la figure 1 ;
- la figure 3 est une vue partielle de face, à plus grande échelle de la partie supérieure du dispositif à roulette de la figure 2, certains éléments ayant été coupés ou arrachés ;
- les figures 4 et 5 sont des vues en élévation des roulettes arrière respectivement de gauche et de droite ;
- la figure 6 est une épure illustrant un mouvement de rotation du chariot ;
- la figure 7 est une vue latérale en élévation d'une roulette selon l'invention ;
- la figure 8 est une vue en coupe d'un organe intermédiaire ;
- la figure 9 est une vue partielle selon la flèche IX de la figure 8.

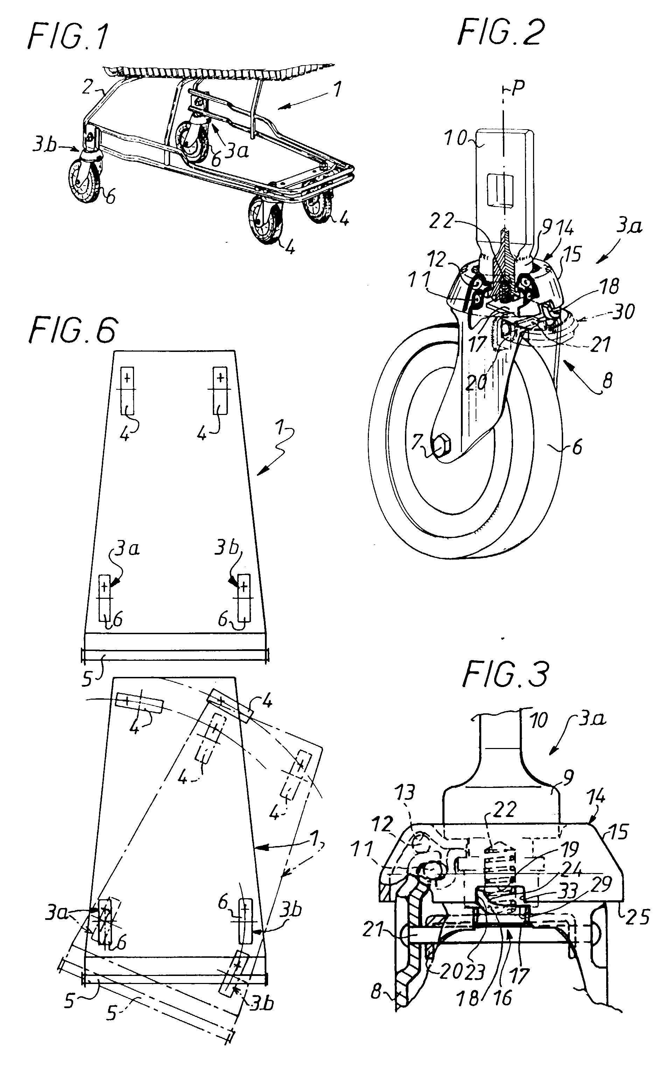

En se reportant notamment à la figure 1, on peut voir la partie inférieure d'un chariot 1 tel que ceux utilisés dans les magasins libre-service, comprenant un bâti 2 monté sur des dispositifs à roulette pivotante. Au moins deux dispositifs à roulette pivotante 3a, 3b sont prévus à une première extrémité du chariot, à savoir, dans l'exemple illustré, l'extrémité arrière considérée dans le sens de progression normal du chariot. Un dispositif à roulette 3a, 3b est prévu de chaque côté du plan longitudinal vertical moyen du chariot 1. Deux autres dispositifs à roulette pivotante 4 sont prévus à l'extrémité avant du chariot.

Le chariot 1 est destiné normalement à être poussé à l'aide d'une barre supérieure transversale horizontale 5 (figure 6), située à l'arrière de la partie supérieure du chariot. L'arrière et l'avant dont il est question dans cette description sont considérés par rapport au sens de progression obtenu lorsque l'on pousse le chariot à partir de la barre 5. Il est clair cependant que le chariot 1 peut être tiré à l'aide de la barre 5, au lieu d'être poussé, le sens de déplacement du chariot étant alors opposé au sens de progression normal.

Le dispositif à roulette 3a est situé sur la gauche du chariot, pour le sens de progression normal, tandis que le dispositif 3b est situé sur la droite. La description qui suit sera faite à propos du dispositif 3a. La description du dispositif 3b s'en déduira comme expliqué plus loin.

Le dispositif à roulette 3a comprend, figures 1 à 4, une roulette proprement dite 6 montée rotative autour d'un axe 7 porté par une chape 8 à deux joues coiffant la roulette 6. La chape 8 est montée tournante autour d'un pivot 9 solidaire d'une patte 10 de fixation au bâti du chariot 1. L'axe géométrique P du pivot est l'axe de pivotement.

Le montage rotatif de la chape 8 sur le pivot fixe 9 est assuré à l'aide de deux couronnes à billes 11, 12. La couronne à billes supérieure 12 est logée dans une rainure 13, formant chemin de roulement, prévue dans le fond d'une coupelle 14 retournée, fixée au pivot 9. Cette coupelle 14 comporte un rebord 15 tourné vers le bas. L'axe géométrique du pivot 9 est orthogonal à l'axe 7 de la roulette 6 et est décalé par rapport à cet axe 7. La chape 8 et la roulette peuvent s'orienter autour du pivot 9. Lorsque le chariot roule sur un sol horizontal, le pivot 9 est vertical tandis que l'axe 7 est horizontal.

Le dispositif à roulette pivotante 3a, selon l'invention, comporte un moyen de blocage 16 du pivotement à action unilatérale. Le moyen de blocage 16 est propre à laisser la roulette 6 libre de pivoter dans un sens sur une amplitude suffisante, et à bloquer le pivotement dans l'autre sens.

Comme visible sur les figures 2 et 3, le moyen de blocage 16 de la roulette 6 comprend un doigt 17 lié en pivotement à la chape 8 et donc à la roulette 6, et situé au-dessus de cette roulette. Le doigt 17 est formé par une sorte de lamelle s'étendant sensiblement orthogonalement à la direction du pivot 9, au-dessous de celui-ci, l'extrémité radiale extérieure de la lamelle 17 étant découpée transversalement et relevée vers le haut pour former un bec 18 propre à s'engager par son extrémité dans une échancrure 19 en forme de U prévue dans le rebord 15 de la coupelle 14.

Le doigt 17 comporte, légèrement en retrait dans le sens radial par rapport au bec 18, deux extensions transversales munies à leur extrémité d'une oreille 20 rabattue vers le bas, voisine de la surface intérieure d'une joue de la chape 8. Une tige d'articulation 21, parallèle à l'axe 7, traverse des trous prévus respectivement dans les joues de la chape 8 et dans les oreilles 20.

Un moyen élastique constitué par un ressort de compression 22 est prévu pour appliquer le doigt 17 contre le fond d'une encoche 29 que présente la partie supérieure, en forme de jupe 28, de la chape 8 ; dans cette position du doigt 17, le bec 18 du doigt 17 s'étend dans l'échancrure 19. Le ressort 22 est avantageusement disposé coaxialement au pivot 9 dans un trou borgne débouchant sur la face transversale inférieure du pivot 9. Le ressort 22 est en appui, à son extrémité supérieure, contre le fond du trou borgne, c'est-à-dire contre le pivot 9 fixé au bâti du chariot, tandis que l'autre extrémité, à savoir l'extrémité inférieure, du ressort 22 est en appui contre la zone intérieure du doigt 17. Comme on le voit, l'action du ressort 22, par suite de l'articulation autour de la tige 21, a tendance à soulever le bec 18.

Une extrémité 23 de l'échancrure 19 forme une butée d'arrêt pour le doigt 17. Cette extrémité 23 est constituée par un bord vertical propre à coopérer avec un bord vertical conjugué du bec 18 de sorte que l'effort de retenue du doigt 17, par la coupelle 14, ne crée aucune composante verticale vers le bas susceptible d'abaisser le doigt 17.

La face supérieure 24 du bec 18 est inclinée et joue le rôle d'une rampe ; ainsi, la chape 8 et la roulette 6 peuvent pivoter dans le sens pour lequel la rampe 24 vient coopérer avec l'autre extrémité 33 de l'échancrure 19. Il en résulte un abaissement progressif de l'extrémité extérieure du doigt 17 jusqu'à ce qu'elle vienne en contact avec le bord inférieur 25. La roulette 6 peut poursuivre son mouvement de pivotement sur un tour complet, le bec 18 entrant à nouveau dans l'échancrure 19, sous l'action du ressort 22, lorsqu'il a complètement franchi l'extrémité 23. La roulette 6 peut ainsi effectuer plusieurs tours de pivotement dans le sens autorisé.

Dans l'exemple représenté sur les figures, l'échancrure 19 est prévue du côté avant de la coupelle 14 et la butée d'arrêt 23, pour la roulette arrière droite 6, est située à l'extrémité gauche selon la figure 3, de l'échancrure 19, c'est-à-dire à l'extrémité intérieure de cette échancrure.

Dans le sens normal de progression, l'axe 7 se trouve en arrière du pivot 9, de sorte que le blocage réalisé par la butée d'arrêt 23 empêche, dans l'exemple représenté, tout pivotement de la chape 8 et de la roulette 6 vers l'extérieur, qui correspondrait à un déplacement du bec 18 vers la gauche de la figure 3. Par contre la roulette 6 peut pivoter vers l'intérieur ce qui correspond à un déplacement du bec 18 vers la droite de la figure 3 avec rencontre de la rampe 24 avec l'extrémité 33 de l'échancrure 19.

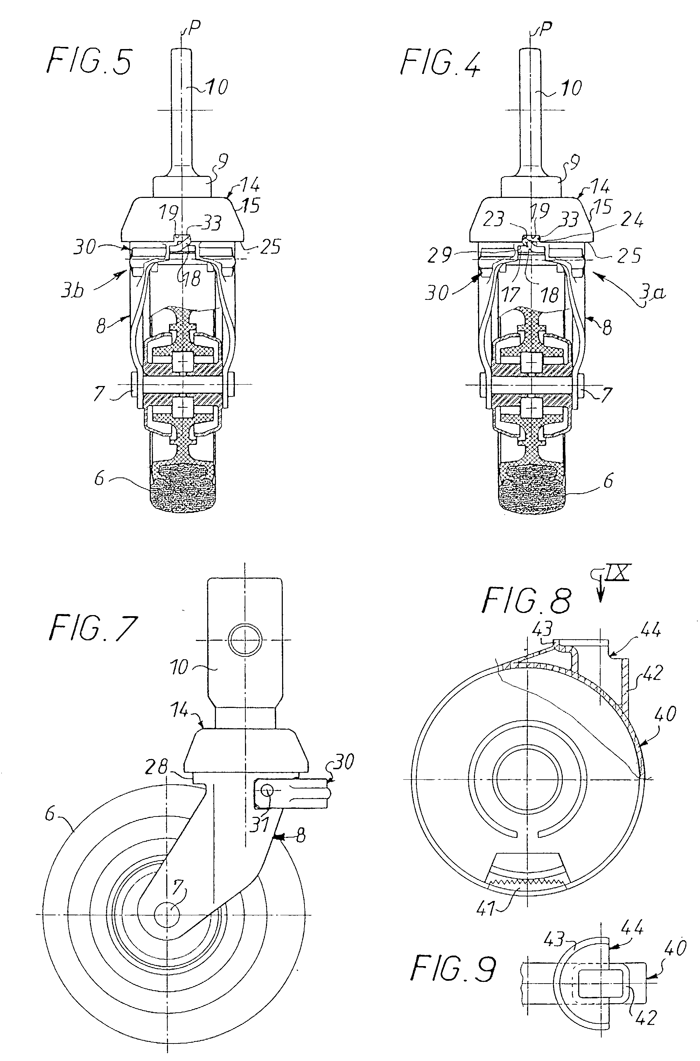

L'autre dispositif à roulette 3b est agencé également pour que la roulette arrière droite 6 puisse pivoter vers l'intérieur et soit bloquée vers l'extérieur. Ceci se traduit au niveau de l'agencement du bec 18 par une découpe opposée, comme montré sur la figure 5, la coupelle 14 restant inchangée, l'autre extrémité de l'échancrure 19, c'est-à-dire l'extrémité 33, jouant alors le rôle de butée d'arrêt qui se trouve donc sur la droite tandis que la rampe 24 du bec 18 du doigt est inclinée dans le sens opposé à celui du doigt du dispositif 3a. Les autres éléments du dispositif à roulette 3b sont semblables à ceux décrits à propos du dispositif 3a.

Le fonctionnement du chariot selon l'invention est le suivant.

Lorsque l'utilisateur pousse le chariot 1 en ligne droite, les dispositifs à roulette arrière 3a, 3b prennent leur position d'avance en ligne droite pour laquelle le bec 18 du doigt 17 associé à la roulette se trouve dans l'échancrure 19, en appui contre la butée 23. La roulette 6 ne s'écarte pas de cette position car, d'un côté, elle est complètement bloquée par la butée 23, tandis que, de l'autre, l'action conjuguée de la rampe 24 et du ressort 22 agissant sur le levier 17 assure le retour de la roulette dans la position d'avance en ligne droite ; cette action se combine avec l'effet produit par l'angle de chasse de la roulette.

Ainsi, l'avance en ligne droite du chariot 1 est assurée dans de bonnes conditions, même si ce chariot est lourdement chargé.

Lorsque l'utilisateur veut faire tourner le chariot 5, par exemple vers la gauche comme illustré sur la figure 6, la roulette arrière droite pourra tourner vers l'intérieur ce qui facilite le mouvement de rotation du chariot sans que l'utilisateur ait à effectuer une manoeuvre visant à débloquer le pivotement de la roulette arrière droite. Dans le cas où un utilisateur déplacerait le chariot 1 dans le sens contraire au sens normal, c'est-à-dire en exerçant une traction sur la barre 5, les roulettes 6 pourraient effectuer un demi-tour en pivotement et devenir roulettes avant pivotantes permettant un déplacement satisfaisant du chariot dans ce sens inverse au sens normal.

Le moyen de blocage qui vient d'être décrit peut être protégé de l'extérieur ; cette protection peut être obtenue par un cavalier 30, figure 7, l'entourant, fixée en 31 à chacune des joues de la chape 8.

Les roues 6 représentées sont des roues classiques ; bien entendu l'invention s'applique également à des roues susceptibles d'immobiliser le chariot sur le trottoir roulant, plus particulièrement sur un trottoir garni d'un tapis à surface rainurée, telles que celle montrée et décrite dans le document FR-A-2 707 232. Une roue selon ce document comprend deux flasques montés libres en rotation autour de l'axe 7, distants l'un de l'autre de manière à pouvoir s'engager dans les rainures de la surface du tapis et entre lesquels est disposé un organe intermédiaire monté également sur l'axe 7 et portant un moyen de freinage en retrait par rapport aux flasques et apte à venir au contact des nervures de la surface lorsque les flasques sont engagés dans les rainures de celle-ci, l'organe intermédiaire étant empêché de tourner.

Un tel organe intermédiaire est représenté partiellement sur les figures 8 et 9 ; sur ces figures, l'organe intermédiaire 40 est en forme générale de disque portant à sa partie inférieure un patin 41 ; à sa partie supérieure, décalée par rapport au diamètre vertical qui passe par le centre du patin 41, une jambe 42 porte à sa partie supérieure un collet 43 de forme semi-circulaire destiné à s'engager dans la jupe 28 de la chape 8 pour immobilisation en rotation de l'organe intermédiaire 40 ; une découpe 44 affectant tant le collet 43 que la jambe 42 évite à ceux-ci d'interférer avec le moyen de blocage 16, plus précisément avec les oreilles 20 et la tige 21 de celui-ci.

## Revendications

1. Chariot comprenant un bâti (2) monté sur dispositifs à roulette pivotante, deux dispositifs (3a,3b) au moins étant prévus à une première extrémité du chariot, ces deux dispositifs à roulette pivotante (3a,3b) étant situés respectivement de part et d'autre de l'axe longitudinal moyen du chariot (1), chacun des dispositifs à roulette (3a,3b) de la première extrémité comportant un moyen de blocage (16) du pivotement de la roulette (6) à action unilatérale et propre à laisser la roulette (6) libre de pivoter dans un sens, suivant une amplitude suffisante, et à bloquer le pivotement dans l'autre sens, les sens de blocage étant opposés pour les deux roulettes de la première extrémité du chariot situées de part et d'autre de l'axe longitudinal moyen du chariot, le moyen de blocage à action unilatérale (16) d'une roulette (6) comprenant un doigt (17) lié en pivotement à la roulette (6) et situé au-dessus de celle-ci, ce doigt (17) s'étendant sensiblement orthogonalement à la direction du pivot (9) et pouvant s'engager dans une échancrure (19) ménagée dans un rebord (15) d'une coupelle retournée (14), fixe par rapport au bâti (2) et située au-dessus de la roulette, l'une (23) des extrémités de l'échancrure (19) formant une butée d'arrêt du doigt (17), caractérisé par le fait que l'échancrure (19) est en U et le doigt (17) comporte une rampe (24) de sorte qu'en s'éloignant de la butée d'arrêt (23) il descend progressivement pour rejoindre le contour inférieur (25) du rebord de la coupelle et passe l'échancrure (19).

2. Chariot selon la revendication 1, caractérisé par le fait que la rampe (24) est constituée par la face supérieure d'un bec (18) issu de l'extrémité radiale extérieure du doigt (17) en forme de lamelle, découpée transversalement et relevée vers le haut.

3. Chariot selon la revendication 2, dans lequel la roulette (6) est montée rotative autour d'un axe (7) porté par une chape (8), caractérisé par le fait que le doigt (17) est articulé sur une tige (21) orthogonale à la direction de l'axe de pivotement (P), située à distance radiale du dit axe de pivotement, entre cet axe de pivotement (P) et le rebord (15) de la coupelle, et un moyen élastique (22) est prévu pour appliquer le doigt (17) contre une jupe (28) que présente la chape (8) à sa partie supérieure, le bec (18) s'étendant dans l'échancrure (19).

4. Chariot selon la revendication 3, caractérisé par le fait que le moyen élastique est constitué par un ressort de compression (22), en particulier placé coaxialement à l'axe de pivotement (P), prenant appui à une extrémité contre une partie (9) fixée au bâti du chariot et, à son autre extrémité, contre la zone intérieure du doigt (17).

5. Chariot selon l'une des revendications 1 à 4, caractérisé par le fait que les dispositifs à roulette pivotante (3a,3b) munis d'un moyen de blocage à action unilatérale (16) sont les dispositifs à roulette arrière, considérés suivant le sens normal de progression du chariot.

6. Chariot selon la revendication 5, dans lequel les roulettes arrière sont montées pivotantes autour d'un axe vertical décalé longitudinalement vers l'avant par rapport à l'axe de rotation de la roulette, caractérisé par le fait que le moyen de blocage (16) de chaque roulette arrière est propre à bloquer tout pivotement de la roulette (6) vers l'extérieur, à partir de la position normale des roulettes arrière dans une progression en ligne droite du chariot, et à laisser libre un pivotement vers l'intérieur, au moins sur une plage angulaire suffisante.

7. Chariot selon l'une des revendications 1 à 6, caractérisé par le fait que la roulette (6) est classique et adaptée à rouler sur une surface lisse.

8. Chariot selon l'une des revendications 1 à 6, caractérisé par le fait que la roulette est adaptée à immobiliser le chariot sur un trottoir roulant garni d'un tapis à surface rainurée et comprend deux flasques montés libres en rotation autour de l'axe (7) et entre lesquels est disposé un organe intermédiaire (40) immobilisé en rotation par rapport au bâti (2) et portant un patin (41).

9. Chariot selon les revendications 3 et 8 prises conjointement, caractérisé par le fait que l'organe intermédiaire (40) est en forme générale de disque et présente à sa partie supérieure une jambe (42) munie d'un collet (43) destiné à s'engager dans la jupe (28) de la chape (8).

10. Chariot selon la revendication 9, caractérisé par le fait qu'une découpe (44) affectant tant le collet (43) que la jambe (42) elle-même reçoit en partie le moyen de blocage (16).

11. Dispositif à roulette pour chariot, en particulier pour un chariot selon l'une des revendications 1 à 10, comprenant une roulette (6) montée rotative autour d'un axe (7) porté par une chape (8), un pivot (9) orthogonal à l'axe de la roulette et décalé par rapport à cet axe, la chape et la roulette pouvant s'orienter autour du pivot, et un moyen de blocage du pivotement (16), qui comprend un doigt (17) lié en pivotement à la roulette (6) et situé au-dessus de celle-ci, ce doigt (17) s'étendant sensiblement orthogonalement à la direction du pivot (9) et pouvant s'engager dans une échancrure (19) ménagée dans un rebord (15) d'une coupelle retournée (14), fixe par rapport au pivot (9) et située au-dessus de la roulette, l'une (23) des extrémités de l'échancrure (19) formant une butée d'arrêt du doigt (17), caractérisé par le fait que l'échancrure (19) est en U et le doigt (17) comporte une rampe (24) de sorte qu'en s'éloignant de la butée d'arrêt (23) il descend progressivement pour rejoindre le contour inférieur (25) du rebord de la coupelle et passe l'échancrure (19).

12. Dispositif à roulette selon la revendication 11, caractérisé par le fait que la rampe (24) est constituée par la face supérieure d'un bec (18) issu de l'extrémité radiale extérieure du doigt (17) en forme de lamelle, découpée transversalement et relevée vers le haut.

13. Dispositif à roulette selon la revendication 12, caractérisé par le fait que le doigt (17) est articulé sur une tige (21) orthogonale à la direction de l'axe de pivotement (P), située à distance radiale du dit axe de pivotement, entre cet axe de pivotement (P) et le rebord (15) de la coupelle, et un moyen élastique (22) est prévu pour appliquer le doigt contre une jupe (28) que présente la chape (8) à sa partie supérieure, le bec (18) s'étendant dans l'échancrure (19).

14. Dispositif à roulette selon la revendication 13, caractérisé par le fait que le moyen élastique est constitué par un ressort de compression (22), en particulier placé coaxialement à l'axe de pivotement (P), prenant appui à une extrémité contre une partie (9) fixée au bâti du chariot et, à son autre extrémité, contre la zone intérieure du doigt (17).

15. Dispositif à roulette selon l'une des revendications 11 à 14, caractérisé par le fait que la roulette (6) est classique et adaptée à rouler sur une surface lisse.

16. Dispositif à roulette selon l'une des revendications 11 à 14, caractérisé par le fait que la roulette est adaptée à immobiliser le chariot sur un trottoir roulant garni d'un tapis à surface rainurée et comprend deux flasques montés libres en rotation autour de l'axe (7) et entre lesquels est disposé un organe intermédiaire (40) immobilisé en rotation par rapport au bâti (2) et portant un patin (41).

17. Dispositif à roulette selon les revendications 13 et 16 prises conjointement, caractérisé par le fait que l'organe intermédiaire (40) est en forme générale de disque et présente à sa partie supérieure une jambe (42) munie d'un collet (43) destiné à s'engager dans la jupe (28) de la chape (8).

18. Dispositif à roulette selon la revendication 17, caractérisé par le fait qu'une découpe (44) affectant tant le collet (43) que la jambe (42) elle-même reçoit en partie le moyen de blocage (16).
